# EUROPEAN PATENT APPLICATION

(11) **EP 4 691 691 A1**
(43) Date of publication of application: **11.02.2026**
(21) Application number: 24779156.9
(22) Date of filing: 05.03.2024
(51) Int. Cl.: B23Q 11/00, B23Q 11/08

(54) **MACHINE TOOL AND CHIP-TAKING-OUT METHOD FOR MACHINE TOOL**

(30) Priority: 30.03.2023 JP 2023055420
(71) Applicant: Star Micronics Co., Ltd., Shizuoka-shi, Shizuoka 422-8654 (JP)
(72) Inventor: KURODA, Shingo, Shizuoka-shi, Shizuoka 422-8654 (JP); KAWARASAKI, Tetsu, Shizuoka-shi, Shizuoka 422-8654 (JP)
(74) Representative: Grünecker Patent- und Rechtsanwälte PartG mbB
(86) International application number: PCT/JP2024/008227
(87) International publication number: WO 2024/203018

(57) **Abstract**

[Problem] The present invention provides a machine tool and a chip removal method for a machine tool, with which contamination of the outside of the machine tool is suppressed.

[Means of Solution] An NC lathe 1 for machining a work W includes a housing 11, a chip bucket 8 that is placed inside of the housing 11 in order to receive chips produced when the work W is machined, an opening formation portion 112 that is provided in the housing 11 and has an opening 1121 formed therein through which the chip bucket 8 can be pulled out to the outside of the housing 11, and an opening cover 15 that is detachably attached to the housing 11 so as to close the opening 1121 in an attached state attached to the housing 11, wherein the opening formation portion 112 has a slit 1122 that is formed continuously with the opening 1121 so as to extend in a width direction of the opening 1121, and that allows the opening cover 15 removed from the housing 11 to be inserted into the housing 11.

## Description

### [Technical Field]

The present invention relates to a machine tool for machining a workpiece, and a chip removal method for a machine tool.

### [Background Art]

Conventionally, cutting oil is used in a machine tool such as a lathe or a milling machine for machining a workpiece. The cutting oil is also referred to as coolant liquid, and as well as reducing machining resistance generated when machining the workpiece, has a cooling effect on the workpiece and the tool. Furthermore, in a machine tool, chips are produced when the workpiece is machined. In order to remove these chips from a housing of the machine tool, a chip bucket for receiving the chips is disposed in a lower end part of a cutting chamber of the machine tool (see, for example, PTL 1). The housing of the machine tool is provided with an opening formation portion, and an opening through which the chip bucket can be pulled out of the housing is formed in the opening formation portion. Further, an opening cover for closing the opening is detachably attached to the housing of the machine tool so as to prevent chips and cutting oil from jumping or flowing out of the machine tool to the outside of the tool through the opening. The opening cover is formed to have a height higher than that of the opening and a width wider than that of the opening so as to cover the entire opening in an attached state attached to the housing. When discarding the chips accumulated in the chip bucket, the operator of the machine tool removes the opening cover from the housing and places the opening cover on the outside of the tool, and then pulls the chip bucket out of the housing of the machine tool and discards the chips accumulated in the chip bucket to a disposal box or the like on the outside of the tool.

### [Citation List]

### [Patent Literature]

[PTL 1] Japanese Patent Application Publication No. 2021-30355

### [Summary of Invention]

### [Technical Problem]

Chips and cutting oil scattered by the machining adhere to an inside surface of the opening cover, which is on the inside in the attached state where the opening cover is attached to the housing of the machine tool. In the machine tool described in PTL 1, when the opening cover is removed from the housing and placed on the outside of the machine tool, or while the chip bucket is being pulled out or the chips are being discarded with the opening cover in this placed state, chips and cutting oil adhered to the inside surface of the opening cover may fall off to the outside of the machine tool. The fallen chips and cutting oil may contaminate the outside of the tool, such as the floor of a factory where the machine tool is installed.

The present invention has been designed in consideration of the problem described above, and an object thereof is to provide a machine tool and a chip removal method for a machine tool, with which contamination of the outside of the machine tool is suppressed.

### [Technical Solution]

A machine tool of the present invention, for solving the problem described above, is a machine tool for machining a workpiece, and includes:
a housing;
a chip bucket that is placed inside of the housing in order to receive chips produced when the workpiece is machined;
an opening formation portion that is provided in the housing and has an opening formed therein through which the chip bucket can be pulled out to the outside of the housing; and
an opening cover that is detachably attached to the housing so as to close the opening in an attached state attached to the housing,
wherein the opening formation portion has a slit that is formed continuously with the opening so as to extend in a width direction of the opening, and that allows the opening cover removed from the housing to be inserted into the housing.

According to this machine tool, by making it possible to insert the opening cover into the housing, the need to place the opening cover removed from the housing on the outside of the machine tool is eliminated. As a result, chips and cutting oil adhered to the inside surface of the opening cover are prevented from falling off to the outside of the machine tool.

Here, the slit may allow a lower part of the opening cover in the attached state to be inserted into the housing. The opening formation portion may include a slit into which a width-direction end of the opening cover is inserted. Further, the opening formation portion may include slits that form a pair on respective width-direction sides of the opening. In this case, the pair of slits on the two width-direction sides may be formed at the same height position. The opening cover may be plate-shaped, and the slit may be formed such that the slit width is greater than the plate thickness of the opening cover.

In this machine tool, an upper-side part of the opening cover in the attached state is formed to have a width greater than a total width combining the width of the opening and the length of the slit in the extension direction thereof, a lower-side part of the opening cover in the attached state is formed to have a width narrower than the total width, and in the attached state, the upper-side part faces the slit so as to close the slit.

In the attached state, the opening cover closes the slit, and as a result, chips and cutting oil can be prevented from leaking out through the slit. Also, the lower part of the removed opening cover can be inserted into the housing through the slit.

Here, the opening cover may close the entire opening in the attached state. Further, the opening cover may be formed to have a width greater than the width of the opening. Furthermore, the opening cover may be formed at a height higher than the height of the opening. **In** addition, the opening cover may close both the entire opening and the slit in the attached state.

**In** this machine tool, a support member that is fixed inside of the housing so as to receive and support a lower end part of the opening cover inserted into the housing in the attached state may be provided.

By supporting the lower end with the support member, the attitude of the opening cover inserted into the housing can be stabilized.

Here, the support member may be a pair of support members disposed on the respective width-direction sides of the opening. Further, the opening cover inserted into the housing may be supported by the slit part of the opening formation portion at an intermediate part in a height direction in the attached state.

In this machine tool, the support member may be disposed below the slit.

Since the opening cover inserted into the housing is set in an inclined attitude in which the lower side in the attached state is oriented downward by the slit and the support member, chips and cutting oil adhered to the opening cover travel toward the inside of the housing along the opening cover, and are therefore unlikely to fall off to the outside of the machine tool.

Furthermore, in this machine tool, the opening cover may have a protruding portion that protrudes into a pull-out path of the chip bucket so as to make it impossible to pull the chip bucket out of the housing in a state where the opening cover has been inserted into the housing in a direction in which an inside surface that is on the inside in the attached state forms a lower surface.

According to this aspect, when the opening cover is inserted into the housing in a direction in which the inside surface forms the lower surface, it becomes impossible to pull the chip bucket out of the housing, and therefore insertion of the opening cover into the housing with the inside surface as the upper surface is promoted. Furthermore, by inserting the opening cover into the housing with the inside surface as the upper surface, a situation in which chips and cutting oil adhered to the opening cover fall off to the outside of the machine tool during insertion of the opening cover or while the opening cover is being inserted into the housing 11 is suppressed.

Here, the opening cover may be disposed such that in a state in which the opening cover has been inserted into the housing in a direction in which the inside surface that is on the inside in the attached state forms the upper surface, the protruding portion is disposed in a position away from the pull-out path of the chip bucket. The protruding portion may abut against the chip bucket when an attempt is made to pull the chip bucket out of the housing so as to make it impossible to pull the chip bucket out of the housing.

A chip removal method for a machine tool according to the present invention, for solving the problem described above, is a chip removal method for a machine tool having a housing, a chip bucket that is placed inside of the housing in order to receive chips produced when a workpiece is machined, an opening formation portion in which an opening through which the chip bucket can be pulled out to the outside of the housing and a slit formed continuously with the opening so as to extend in a width direction of the opening are formed, and an opening cover that is detachably attached to the housing so as to close the opening in an attached state attached to the housing, the chip removal method including:
a removal step for removing the opening cover from the housing;
an insertion step for inserting the opening cover removed in the removal step into the housing by inserting the opening cover into the slit; and
a pull-out step for pulling the chip bucket out of the housing.

According to this chip removal method for a machine tool, the opening cover is inserted into the housing in the insertion step, and therefore a situation in which chips and cutting oil adhered to an inside surface of the opening cover fall off to the outside of the machine tool when the opening cover removed from the housing is placed on the outside of the machine tool is suppressed.

Here, the insertion step may be a step for inserting the opening cover into the slit in a direction in which an inside surface that is on the inside in the attached state forms the upper surface. Further, the insertion step may be a step for inserting respective width-direction end parts of the opening cover into a pair of slits formed at respective width-direction ends of the opening cover.

### [Advantageous Effects of Invention]

According to the present invention, it is possible to provide a machine tool and a chip removal method for a machine tool, with which contamination of the outside of the machine tool is suppressed.

### [Brief Description of the Drawings]

[Fig. 1] Fig. 1 is a front view of an NC lathe according to an embodiment.
[Fig. 2] Fig. 2 is a simplified front view showing an internal configuration of the NC lathe shown in Fig. 1.
[Fig. 3] Fig. 3 is a right-side view of the NC lathe shown in Fig. 1.
[Fig. 4] Fig. 4(a) is a front view of an opening cover shown in Fig. 3, and Fig. 4(b) is a leftside view of the opening cover shown in Fig. 4(a).
[Fig. 5] Fig. 5 is a right-side view similar to Fig. 3, showing the NC lathe with the open cover removed.
[Fig. 6] Fig. 6 is a perspective view of a chip bucket.
[Fig. 7] Fig. 7 is a flowchart showing a chip removal operation of the NC lathe shown in Fig. 1.
[Fig. 8] FIG. 8(a) and 8(b) are cross-sectional views showing an operation for removing the opening cover shown in Fig. 3 from a housing.
[Fig. 9] FIG. 9(a) and 9(b) are cross-sectional views showing an operation for inserting the opening cover shown in Fig. 3 into the housing.
[Fig. 10] Fig. 10 is a cross-sectional view showing an operation for pulling out the chip bucket shown in Fig. 1 from the housing.
[Fig. 11] Fig. 11 is a cross-sectional view similar to Fig. 10, showing a state in which an opening cover according to a modified example has been inserted into the housing.
[Fig. 12] Fig. 12 is a right-side view showing a guide bush and a first tool post of the NC lathe shown in Fig. 1.
[Fig. 13] Fig. 13 is a plan view of cutting-tool tool attachment portions provided on the first tool post shown in Fig. 12.
[Fig. 14] Fig. 14 is a cross-sectional view of a thermal displacement sensor attached to a cutting-tool tool attachment portion provided on the first tool post shown in Fig. 12.

### [Description of Embodiments]

An embodiment of the present invention will be described below with reference to the figures. In this embodiment, an example in which the present invention is applied to a numerical control (NC) lathe will be described.

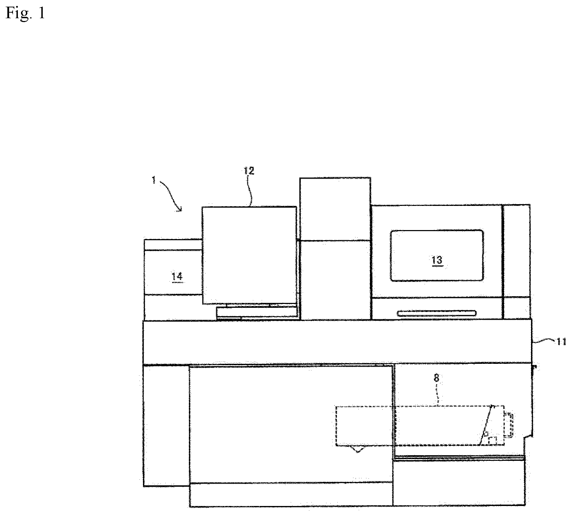

Fig. 1 is a front view of an NC lathe 1 according to this embodiment.

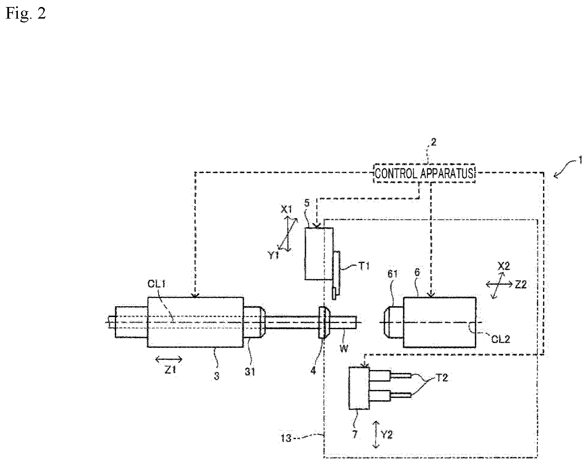

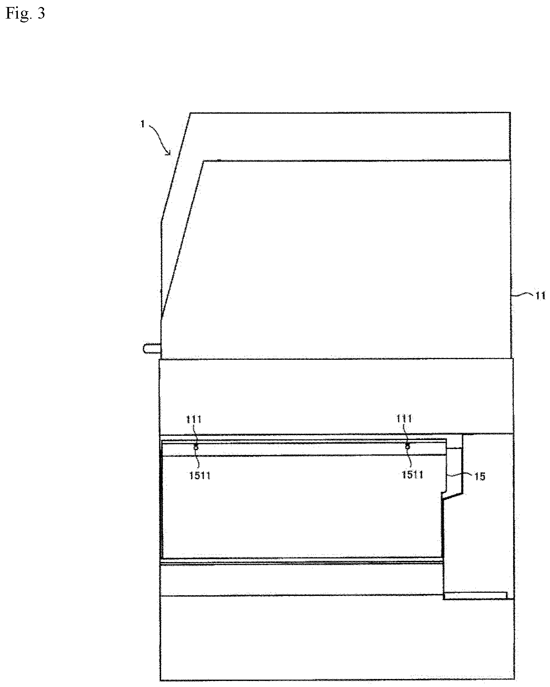

As shown in Fig. 1, the NC lathe 1 of this embodiment includes a housing 11 and an operation panel 12. The NC lathe 1 corresponds to an example of a machine tool. The NC lathe 1 of this embodiment is a so-called Swiss lathe. Note that the housing 11 of this embodiment refers to an exterior part of the NC lathe 1 and a body part of the NC lathe 1, excluding the operation panel 12 and an opening cover 15 to be described below (see Fig. 3). A cutting chamber 13 and a spindle chamber 14 are formed in the interior of the housing 11. The cutting chamber 13 is a chamber in which a space for machining a tip end part of a work W (see Fig. 2) constituted by a metal bar is formed, and is disposed on the right side of the NC lathe 1 when looking from the front surface side. The work W corresponds to an example of a workpiece. The spindle chamber 14 is a chamber in which a first headstock 3 (see Fig. 2) and a first spindle 31 (see Fig. 2) are disposed, and is disposed on the left side of the NC lathe 1 when looking from the front surface side. A chip bucket 8 for receiving chips produced when machining the work W is placed inside of the cutting chamber 13 in a lower end part thereof. The chip bucket 8 will be described in detail later.

The operation panel 12 is a panel constituted by an operating part and a display screen. The operating part is constituted by a plurality of buttons, keys, and so on for receiving input operations performed by an operator of the NC lathe 1. The display screen is a display for displaying an NC program and various information relating to the NC lathe 1, such as various setting values and error content of the NC lathe 1. Note that in Fig. 1, the buttons and keys of the operating part and the display screen have been omitted.

Fig. 2 is a simplified front view showing an internal configuration of the NC lathe 1 according to this embodiment. Fig. 2 also shows a control apparatus 2 provided on the NC lathe 1. Further, the range of the cutting chamber 13 as seen from the front is indicated in Fig. 2 by a thin dot-dot-dash line rectangle.

As shown in Fig. 2, the NC lathe 1 includes, in the interior thereof, the first headstock 3, a guide bush 4, a first tool post 5, a second headstock 6, and a second tool post 7. The first headstock 3, the guide bush 4, the first tool post 5, the second headstock 6, and the second tool post 7 are disposed on a leg (not shown) that serves as a base. Operations of the first headstock 3, the first tool post 5, the second headstock 6, and the second tool post 7 are controlled by the control apparatus 2. The control apparatus 2 is a computer that operates the first headstock 3, the first tool post 5, the second headstock 6, and the second tool post 7 by means of numerical control mainly in accordance with the NC program. Further, detection signals from various sensors provided on the NC lathe are input to the control apparatus 2. The control apparatus 2 executes various calculations on the basis of these detection signals so as to determine a moving position of the first headstock 3, the first tool post 5, the second headstock 6, or the second tool post 7. The control apparatus 2 also displays state information and so on of the NC lathe 1 on the display screen.

The first headstock 3 includes the first spindle 31. The first headstock 3 is capable of moving in a Z1-axis direction. The Z1-axis direction is a horizontal direction, and the left-right direction in Fig. 1. The first spindle 31 is capable of rotating about a first spindle axis CL1 while releasably gripping the elongated bar-shaped work W inserted into the interior thereof. The direction of the first spindle axis CL1 matches the Z1-axis direction.

The guide bush 4 supports a tip end-side part of the work W gripped by the first spindle 31 so as to be free to slide in the Z1-axis direction. Bending of the work W during machining is suppressed by the guide bush 4, and as a result, a long, thin work W can be machined particularly accurately. An end surface of the guide bush 4 on the opposite side to the side on which the first spindle 31 is disposed is exposed to the interior of the cutting chamber 13.

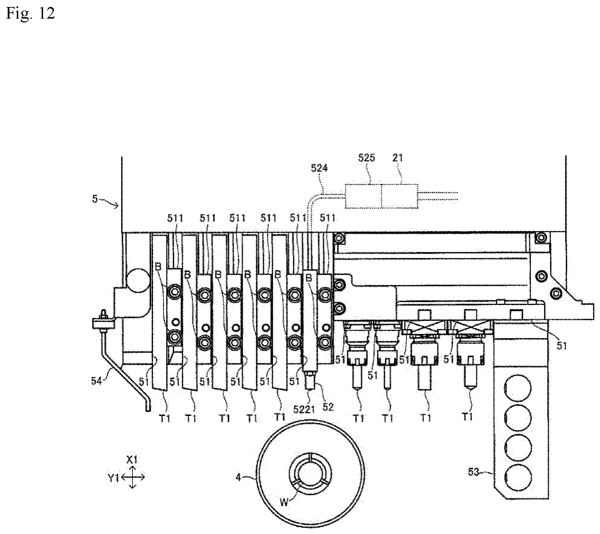

The first tool post 5 is capable of moving in a Y1-axis direction that is orthogonal to the Z1-axis direction and oriented in a horizontal direction, and an X1-axis direction oriented in a vertical direction. In Fig. 1, the vertical direction is the X1-axis direction, and the direction orthogonal to the paper surface is the Y1-axis direction. A plurality of tool attachment portions 51 (see Fig. 12) to which first tools T1 for machining the work W are attached are provided on the first tool post 5 so as to be arranged in the Y1-axis direction. The first tools T1 respectively attached to the tool attachment portions 51 are arranged in a comb-tooth shape. By moving the first tool post 5 in the Y1-axis direction, a desired first tool T1 is selected from the plurality of first tools T1. The first tool post 5 then moves in the X1-axis direction, whereby the selected first tool T1 machines the tip end part of the work W. Chips produced by the machining and cutting oil used in the machining fall off from the vicinity of a machining point, which is the contact point between the work W and the first tool T1, and are collected in the chip bucket 8 (see Fig. 1) placed in the lower end part of the cutting chamber 13.

The second headstock 6 includes a second spindle 61. The second headstock 6 is capable of moving in an X2-axis direction and a Z2-axis direction. The X2-axis direction is the same direction as the Y1-axis direction, described above, and the Z2-axis direction is the same direction as the Z1-axis direction, described above. Fig. 1 shows a state in which the second spindle 61 is positioned opposite the first spindle 31 with the guide bush 4 therebetween. In this position, a second spindle axis CL2, which is the rotation center of the second spindle, is disposed so as to be collinear with the first spindle axis CL1. The direction of the second spindle axis CL2 matches the Z2-axis direction. The tip end part of the work W, on which machining using the first spindle 31 has been completed and which has been cut off by a first tool T1 for cut-off machining, is passed to the second spindle 61. The tip end part of the work W passed to the second spindle 61 after being cut off will be referred to as a cut-off work. The second spindle 61 releasably grips the cut-off work passed thereto from the first spindle 31.

The second tool post 7 is capable of moving in a Y2-axis direction. The Y2-axis direction is the same direction as the X1-axis direction, described above. A plurality of second tools T2 such as a drill and an endmill for machining the cut-off work are attached to the second tool post 7. A desired second tool T2 is selected from the plurality of second tools T2 by moving the second tool post 7 in the Y2-axis direction. The second headstock 6 then moves in the Z2-axis direction, whereby a cut-off end-side part of the cut-off work gripped by the second spindle 61 is machined.

Fig. 3 is a right-side view of the NC lathe 1 shown in Fig. 1.

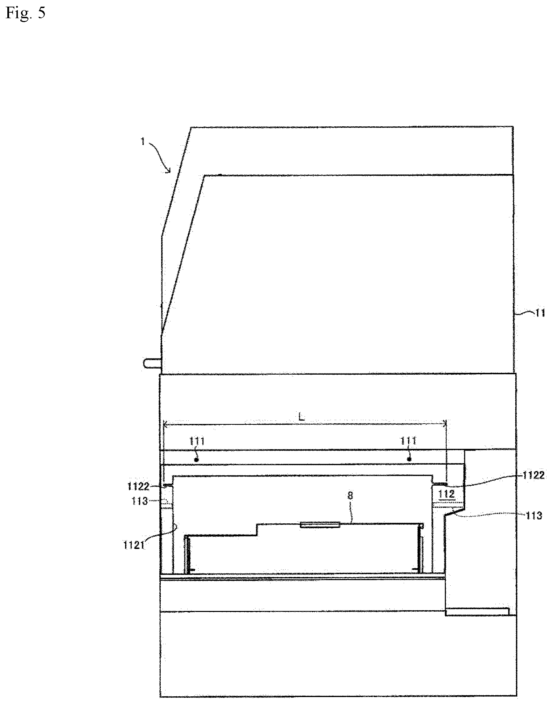

As shown in Fig. 3, an opening cover 15 is detachably attached to a right-side surface of the housing 11 of the NC lathe 1. Two keyhole-shaped keyholes 1511 are formed in an upper portion of the opening cover 15 with an interval therebetween in the width direction of the opening cover 15. Here, the width direction of the opening cover 15 matches the front-rear direction of the NC lathe 1 in an attached state in which the opening cover 15 is attached to the housing 11, and is the left-right direction in Fig. 3. Hereinafter, the left-right direction on a right-side view showing the NC lathe 1 from the right side will be referred to as the width direction. Further, the attached state in which the opening cover 15 is attached to the housing 11 may also be referred simply as the attached state. Note that the width direction of the opening cover 15 is also the width direction of an opening 1121 to be described below (see Fig. 5).

Two cover attachment screws 111 are fixed to the right-side surface of the housing 11 at the same interval as the interval between the two keyholes 1511. The keyhole 1511 is a hole in which an elliptical upper-side part narrower than the head of the cover attachment screw 111 and a circular lower-side part having a larger diameter than the head of the cover attachment screw 111 are formed continuously. By hooking the upper-side parts of the two keyholes 1511 in the opening cover 15 to the respective cover attachment screws 111, an upper end part of the opening cover 15 in the attached state is held on the housing 11.

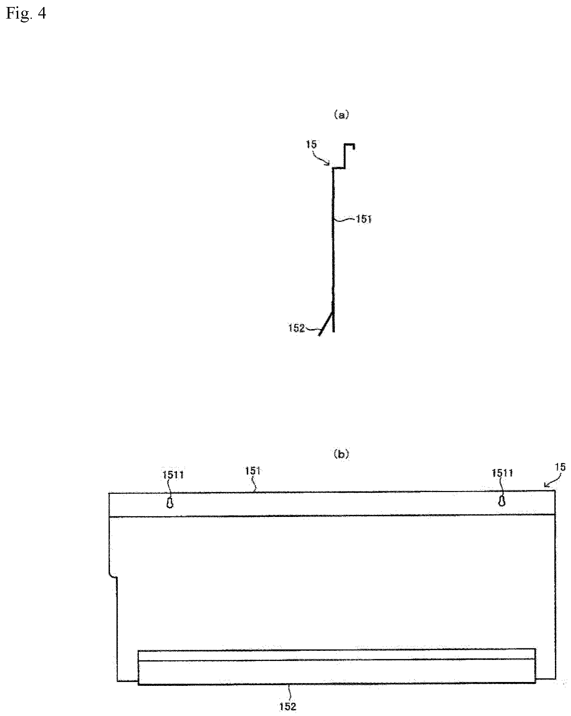

Fig. 4(a) is a front view of the opening cover 15 shown in Fig. 3, and Fig. 4(b) is a leftside view of the opening cover 15 shown in Fig. 4(a). Fig. 4(b) can also be said to be a view of the opening cover 15 when viewed from the inside of the NC lathe 1 in the attached state.

As shown in Figs. 4(a) and 4(b), the opening cover 15 is plate-shaped. More specifically, the opening cover 15 includes a cover body 151 formed by bending a metal plate, and a metal rebound prevention plate 152 welded to the cover body 151. The two keyholes 1511 are formed near an upper end portion of the cover body 151. The cover body 151 is formed such that an upper-side part in the attached state is wider than a lower-side part in the attached state. The rebound prevention plate 152 is disposed on an inside surface that is on the inside of the opening cover 15 in the attached state. Hereinafter, the surface of the opening cover 15 that is on the inside in the attached state will be referred to as the inside surface. An upper end part of the rebound prevention plate 152 is welded to the cover body 151. A lower-side part of the rebound prevention plate 152 is bent into an inverted dogleg shape in a front view so as to be separated from the cover body 151 by a steadily greater distance toward the lower end. When cutting oil that drips down along the inside surface of the cover body 151 in the attached state reaches the rebound prevention plate 152, the cutting oil is guided to the inside of the housing 11 (see Fig. 1) by the rebound prevention plate 152, and as a result, leakage of the cutting oil to the outside of the NC lathe 1 is suppressed. The rebound prevention plate 152 is formed to have a width narrower than the width of a lower-side part of the cover body 151 in the attached state.

Fig. 5 is a right-side view similar to Fig. 3, showing the NC lathe 1 with the opening cover 15 removed.

As shown in Fig. 5, when the opening cover 15 (see Fig. 3) is removed from the housing **11,** the opening 1121 through which the chip bucket 8 can be pulled out of the housing 11 and two slits 1122 forming a pair are exposed. Conversely, in the attached state, the opening cover 15 closes the opening 1121 and the slits 1122. The opening 1121 and the slits 1122 are formed in an opening formation portion 112 provided in a right end part of the housing 11. The opening formation portion 112 is a plate-shaped member facing an inside surface peripheral edge part of the cover body 151 in the attached state. The inside surface peripheral edge part of the cover body 151 in the attached state and an outside surface of the opening formation portion 112 contact each other. This reduces the likelihood of cutting oil leaking out to the outside of the NC lathe 1. Note, however, that some parts are separated due to undulations on the surfaces and so on. The opening formation portion 112 has a roughly portal shape when the NC lathe 1 from which the opening cover 15 has been removed is seen from the right side.

The chip bucket 8 has a box shape with an open top. The opening 1121 has a rectangular shape that is wider than the chip bucket 8 and has a height approximately 1.5 times that of the chip bucket 8. Thus, the chip bucket 8 can be pulled out of the housing 11 through the opening 1121. The width of the opening 1121 is greater than the width of the rebound prevention plate 152 and narrower than the width of the lower-side part of the cover body 151 (see Fig. 4) in the attached state. Further, the height of the opening 1121 is lower than the height of the cover body 151. The two slits 1122 extend horizontally in the width direction of the opening 1121 continuously with the opening 1121. The two slits 1122 are formed in positions of the same height. The slit width (height) of the slit 1122 is approximately three times the plate thickness of the cover body 151. The slit width of the slit 1122 is preferably at least twice the plate thickness of the cover body 151 in view of the ease of insertion of the opening cover 15, the degree of freedom in the attitude of the opening cover 15, and so on. A total width L of the width of the opening 1121 and the lengths of the two slits 1122 in the extension direction (the horizontal direction) is greater than the width of the lower-side part of the cover body 151 in the attached state. Thus, the lower-side part of the opening cover 15 removed from the housing 11 (see Fig. 3) can be inserted into the housing 11 by inserting respective width-direction end parts thereof into the slits 1122. Note that an operation for inserting the opening cover 15 into the housing 11 will be described later. A pair of support members 113 for receiving the lower end part of the opening cover 15 inserted into the housing 11 and supporting the lower end part are fixed to a side wall of the cutting chamber 13 further toward the interior side of the housing 11 than the opening 1121. The pair of support members 113 are disposed in the same position when seen from the front. A height position in which the pair of support members 113 are disposed is lower than the slits 1122. Each of the pair of support members 113 is a plate formed in an L-shape when seen from the front by bending a metal plate 90 degrees, and protrudes inward in the width direction from the side wall of the cutting chamber 13.

As can be seen from Figs. 3 and 5, the upper-side part of the opening cover 15 in the attached state is formed to be wider than the total width L. Accordingly, in the attached state, a width-direction central part of the upper-side part of the opening cover 15 faces the opening 1121, and the respective width-direction end parts of the upper-side part of the opening cover 15 face the slits 1122. In the attached state, the upper-side part of the opening 1121 and the slits 1122 are closed by the upper-side part of the opening cover 15. Moreover, in the attached state, the lower-side part of the opening cover 15 faces the opening 1121 so as to close the lower-side part of the opening 1121. In other words, the opening cover 15 closes both the entire opening 1121 and the slits 1122 in the attached state.

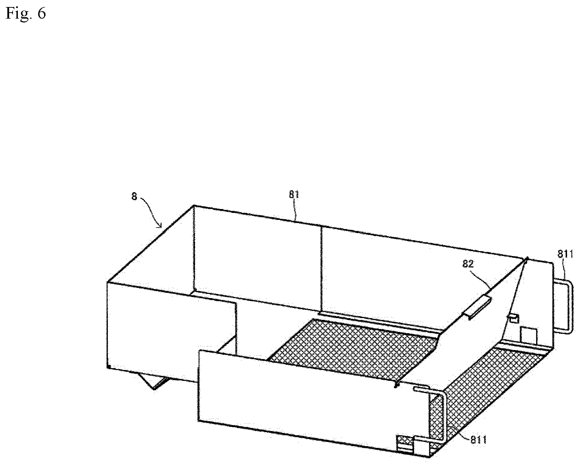

Fig. 6 is a perspective view of the chip bucket 8.

As shown in Fig. 6, the chip bucket 8 is constituted by a bucket body 81 and a partition plate 82 corresponding to a right-side surface of the chip bucket 8. A large number of small holes are formed in a part of the lower surface of the bucket body 81 that is shaded in Fig. 6. These small holes are formed in a size that allows cutting oil to pass through without allowing chips to pass through. The cutting oil flows through the small holes toward the lower end of the cutting chamber 13 (see Fig. 1). Meanwhile, the chips remain stored in the bucket body 81. The bucket body 81 is provided with two handles 811. The handles 811 are provided to make it easier to pull the chip bucket 8 out of the housing 11 (see Fig. 1). The partition plate 82 is detachably attached to the bucket body 81. By removing the partition plate 82 after pulling the chip bucket 8 out of the housing 11, the chips stored in the bucket body 81 can easily be discharged from the bucket body 81. Note that the partition plate 82 is narrower and lower than the opening 1121 (see Fig. 5). Thus, after the partition plate 82 has been removed from the bucket body 81, the partition plate 82 can be placed inside of the housing 11 through the opening 1121.

Next, a chip removal method for removing chips that have accumulated in the chip bucket 8 placed inside of the housing 11 will be described.

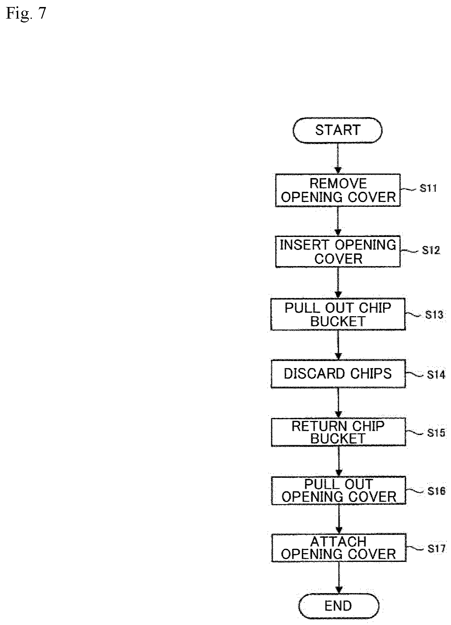

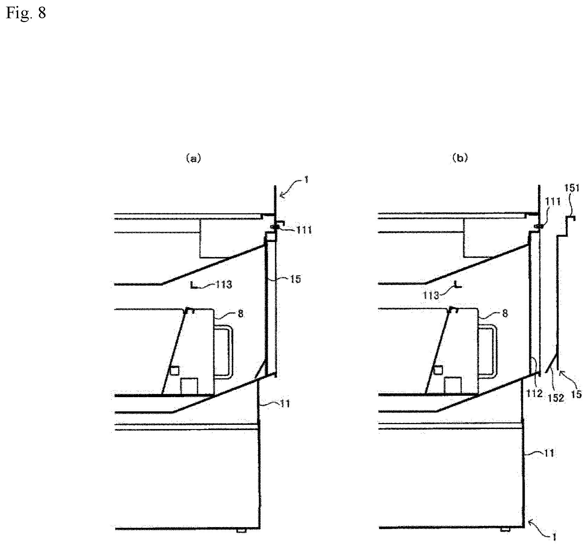

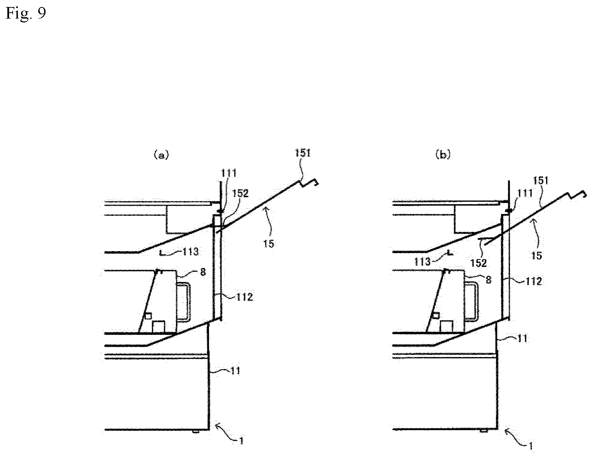

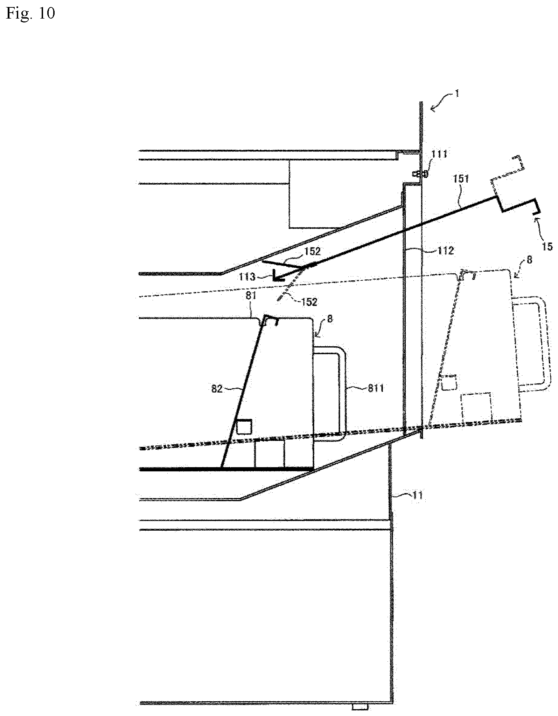

Fig. 7 is a flowchart showing a chip removal operation of the NC lathe 1 shown in Fig. 1. Fig. 8 is a cross-sectional view showing an operation for removing the opening cover 15 shown in Fig. 3 from the housing 11. Fig. 9 is a cross-sectional view showing an operation for inserting the opening cover 15 shown in Fig. 3 into the housing 11. Further, Fig. 10 is a cross-sectional view showing an operation for pulling the chip bucket 8 shown in Fig. 1 out of the housing 11.

As shown in Fig. 7, first, the opening cover 15 is removed from the housing 11 (step S11). Step S11 corresponds to an example of a removal step. In step S11, as shown in Fig. 8(a), the opening cover 15 is slightly lifted so as to align the large-diameter round holes on the lower side of the keyholes 1511 (see Fig. 4(b)) with the height of the heads of the cover attachment screws 111. Then, as shown in Fig. 8(b), the opening cover 15 is separated from the housing 11.

Next, the lower-side part of the opening cover 15 is inserted into the housing 11 (step S12). Step S12 corresponds to an example of an insertion step. In step S12, as shown in Fig. 9(a), the respective width-direction end parts of the lower end of the cover body 151 in the attached state are respectively aligned with the two slits 1122 (see Fig. 5) formed in the opening formation portion 112 in an attitude in which the inside surface of the opening cover 15 forms the upper surface. Next, as shown in Fig. 9(b), the respective width-direction end parts of the lower end of the cover body 151 are inserted into the slits 1122, whereby lower-side part of the opening cover 15 in the attached state is inserted into the housing 11 through the opening 1121 (see Fig. 5) and the slits 1122. Then, as shown in Fig. 10, when the lower end of the cover body 151 in the attached state abuts against the support members 113, the insertion of step S12 is complete. Since the support members 113 are disposed below the slits 1122, as described above, the cover body 151, the lower end of which is abutting against the support members 113, assumes an inclined attitude so as to be positioned in a steadily lower position toward the interior of the housing 11. As a result, chips and cutting oil adhered to the opening cover 15 travel toward the interior of the housing 11 along the surface of the opening cover 15, and are therefore unlikely to fall off to the outside of the NC lathe 1.

Next, the chips stored in the chip bucket 8 are removed by gripping the handles 811 and pulling out the chip bucket 8 to the vicinity of the opening 1121 (see Fig. 5) (step S13). Step S13 corresponds to an example of a pull-out step. In Fig. 10, the chip bucket 8 before being pulled out is shown by a solid line, and the chip bucket 8 in the middle of being pulled out is shown by a dot-dot-dash line. Here, when the opening cover 15 is inserted into the housing 11 in step S12, described above, if the opening cover 15 is inserted in a direction in which the inside surface of the opening cover 15 forms the lower surface, the rebound prevention plate 152 protrudes downward, as shown by the dot-dot-dash line in Fig. 10, so as to protrude into the pull-out path of the chip bucket 8. In step S13, when an attempt is made to pull out the chip bucket 8 in a state where the rebound prevention plate 152 is protruding downward, the rebound prevention plate 152 protruding into the pull-out path of the chip bucket 8 forms an obstruction, thereby hindering the operation to pull out the chip bucket 8. Thus, insertion of the opening cover 15 into the housing 11 with the inside surface of the opening cover 15 forming the upper surface is promoted. In other words, the rebound prevention plate 152 corresponds to an example of a protruding portion. By inserting the opening cover 15 into the housing 11 with the inside surface of the opening cover 15 forming the upper surface, a situation in which chips and cutting oil adhered to the inside surface of the opening cover 15 fall off to the outside of the NC lathe 1 when the opening cover 15 is inserted or when the opening cover 15 is being inserted into the housing 11 is suppressed.

Once the chip bucket 8 has been pulled out from the inside of the housing 11, the partition plate 82 is removed from the bucket body 81 and the chips that have accumulated in the chip bucket 8 are scraped out to a disposal box or the like on the outside of the NC lathe 1 using a chip scraping bar or the like (not shown) (step S14). Then, the chip bucket and the opening cover 15 are returned to their original states by a reverse procedure to that from step S11 to step S13. More specifically, after the partition plate 82 is attached to the bucket body 81 from which the chips have been removed, the chip bucket 8 is returned to the interior of the housing 11 (step S15). After the chip bucket 8 has been placed in a predetermined position, the lower-side part of the opening cover 15 inserted into the housing 11 is extracted from the housing 11 (step S16). Next, while the lower end of the rebound prevention plate 152 of the extracted opening cover 15 is on the inside of an outside surface of the opening formation portion 112, the large-diameter round holes on the lower side of the keyholes 1511 are aligned with the height of the heads of the cover attachment screws 111. Then, the opening cover 15 is moved in the inside direction of the housing 11 so that a peripheral edge part of the inside surface of the opening cover 15 contacts the outside surface of the opening formation portion 112. Next, the opening cover 15 is attached to the housing 11 by slightly lowering the opening cover 15 so as to hook the upper-side parts of the two keyholes 1511 onto the cover attachment screws 111 (step S17).

According to the NC lathe 1 and the chip removal method for the NC lathe 1 described above, the opening cover 15 can be inserted into the housing 11 through the opening 1121 and the slits 1122, thereby eliminating the need to place the opening cover 15 removed from the housing 11 on the outside of the NC lathe 1. Thus, a situation in which chips and cutting oil adhered to the inside surface of the opening cover 15 fall off to the outside of the NC lathe 1 is suppressed, and as a result, contamination of the outside of the NC lathe 1 by the chips and cutting oil can be suppressed. Further, since the upper-side part of the opening cover 15 facing the parts where the slits 1122 are formed is formed to be wider than the total width of the opening 1121 and the slits 1122, the opening 1121 and the slits 1122 are closed by the opening cover 15 in the attached state. Accordingly, it is possible to prevent chips and cutting oil from leaking from the opening 1121 or the slits 1122 when the opening cover 15 is in the attached state. Moreover, since the lower-side part of the opening cover 15 in the attached state is formed to have a width narrower than the total width of the opening 1121 and the slits 1122, the lower-side part of the opening cover 15 can be inserted into the housing 11 through the opening 1121 and the slits 1122.

Next, a modified example of this embodiment will be described. In the following description, constituent elements with identical names to constituent elements described heretofore have been allocated the same reference symbols as those used heretofore, and duplicate description thereof has sometimes been omitted.

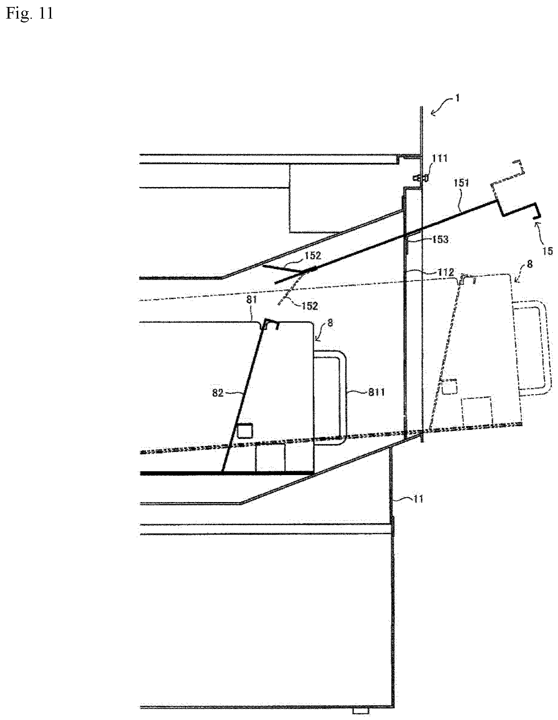

Fig. 11 is a cross-sectional view similar to Fig. 10 showing a state in which the opening cover 15 according to the modified example is inserted into the housing 11.

As shown in Fig. 11, the NC lathe 1 of this modified example differs from the NC lathe 1 described above in that the support members 113 (see Fig. 10) are not provided, and instead, a cover stopper 153 is provided. The opening cover 15 is constituted by the cover body 151, the rebound prevention plate 152, and the cover stopper 153. The cover stopper 153 is fixed to the outside surface of the opening cover 15 that is on the outside when the opening cover 15 is in the attached state. An upper end part of the cover stopper 153 is welded to the cover body 151. A lower-side part of the cover stopper 153 is bent into a dogleg shape when seen from the front so as to be separated from the cover body 151 by a steadily greater distance toward the lower end. The cover stopper 153 has a length longer in the width direction than the opening 1121 (see Fig. 5), and in the state shown in Fig. 11, both ends of the cover stopper 153 are in contact with the opening formation portion 112 so that the opening cover 15 cannot be inserted further. Note that in the state shown in Fig. 11, since the part of the opening cover 15 protruding outwardly from the opening 1121 is heavier than the part located on the inside of the opening 1121, although the opening cover 15 attempts to rotate about the slits 1122 (see Fig. 5) in the clockwise direction of Fig. 11, the cover stopper 153 prevents this rotation such that the attitude shown in Fig. 11 is maintained. Further, as described in the above embodiment, when the opening cover 15 is inserted in a direction in which the inside surface of the opening cover 15 forms the lower surface, the rebound prevention plate 152 protrudes downward, as shown by the dot-dot-dash line in Fig. 11, so as to protrude into the pull-out path of the chip bucket 8.

Incidentally, in the NC lathe 1 (see Fig. 1), to maintain a constant machining accuracy with respect to displacement of the structures of the NC lathe 1 due to heat, a technique for controlling movement of the first tool post and so on by measuring a thermal displacement amount and applying a correction corresponding to the thermal displacement amount is used. For example, a structure such as a ball screw for moving the first tool post 5 (see Fig. 2) expands and contracts (thermally displaces) in response to heat, and the temperature of the structure affects the movement position of the first tool post 5 in the X1-axis direction. Therefore, if the same movement control is continued without performing consistent thermal displacement correction from the initial stage of machining, the machining accuracy is reduced by the heat generated during the machining. To deal with this problem, in the NC lathe 1, for example, the amount of thermal displacement is measured at appropriate timings before and after the machining, and the measurement results are transmitted to the control apparatus 2 (see Fig. 2). The control apparatus 2 determines a correction amount from the measurement results, and controls the movement of the first tool post 5 using a movement amount to which the correction amount has been added.

Fig. 12 is a right-side view showing the guide bush 4 and the first tool post 5 of the NC lathe 1 shown in Fig. 1.

The thermal displacement amount is measured by moving the first tool post 5 in the X1-axis direction and detecting the position where a contact 5221 of a contact-type thermal displacement sensor 52 attached to the first tool post 5 comes into contact with the work W. The thermal displacement sensor 52 is, for example, a actuation transformer-type displacement sensor, an optical scale-type displacement sensor, a magnet scale-type displacement sensor, or the like. As shown in Fig. 12, the thermal displacement sensor 52 of this embodiment is attached to one of the plurality of tool attachment portions 51 to which the first tools T1 are attached. Here, an example in which the thermal displacement sensor 52 is attached to the tool attachment portion 51 located at the bottom of the plurality of cutting-tool tool attachment portions 51 is shown. Note, however, that the thermal displacement sensor 52 can be attached to any of the cutting-tool tool attachment portions 51. The thermal displacement sensor 52 and the cutting tools serving as the first tools T1 are each held on the first tool post 5 by a cutting tool fixture 511 and a bolt B. The thermal displacement sensor 52 has a sensor cable 524 and a sensor connector 525 provided at an end of the sensor cable 524.
The sensor connector 525 is connected to a connection connector 21 connected to the control apparatus 2 (see Fig. 2). Thus, a detection signal is transmitted to the control apparatus 2 when the thermal displacement sensor 52 contacts the work W. Note that in the first tool post 5 of the NC lathe 1 of this embodiment, a plurality of tool attachment portions 51 for rotary tools such as a drill or an end mill are provided below the cutting-tool tool attachment portions 51.

Fig. 12 shows the first tool post 5 having six cutting-tool tool attachment portions 51 and five rotary-tool tool attachment portions 51. The number of tool attachment portions 51 is set for each NC lathe. Note that Fig. 12 shows a state in which an extension attachment portion 53 for attaching a drill or the like oriented in the Z-axis direction is attached to the bottom tool attachment portion 51 of the rotary-tool tool attachment portions 51. Further, the first tool post 5 is provided with a cut-off tool damage sensor 54 for confirming whether a cut-off tool, which is one of the first tools T1, has been damaged by checking, after the work W has been subjected to cut-off machining, whether or not the work W has been cut off by the cut-off machining.

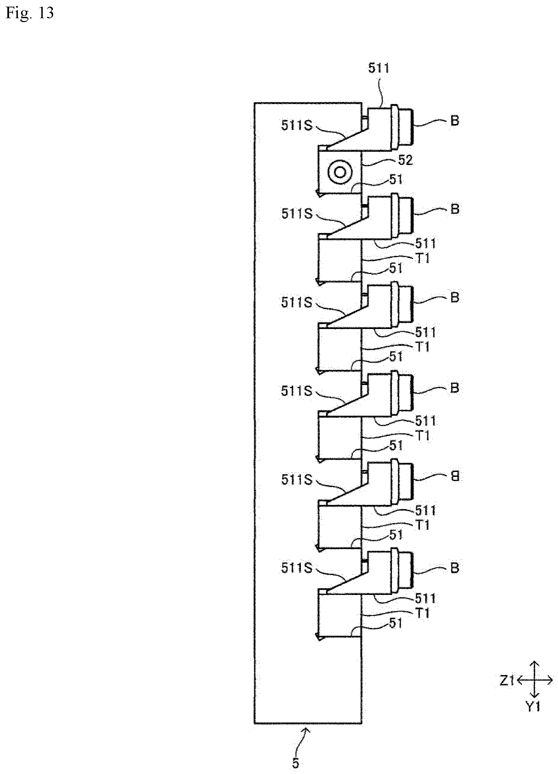

Fig. 13 is a plan view of the cutting-tool tool attachment portions 51 provided on the first tool post 5 shown in Fig. 12. Fig. 13 shows only the cutting-tool tool attachment portions 51 of the first tool post 5 and peripheral parts thereof.

As shown in Fig. 13, an attachment part of the thermal displacement sensor 52 that is attached to the cutting-tool tool attachment portion 51 has the same square columnar shape as the cutting tool serving as the first tool T1. A cutting tool having an attachment part with a height of 11.8 mm or more and 12.2 mm or less can be attached to the cutting-tool tool attachment portion 51 of this embodiment. The attachment part of the thermal displacement sensor 52 has the same 12 mm square prismatic shape as the attachment part of the cutting tool used in the first tool post 5 of this embodiment, and can therefore be attached to the cutting-tool tool attachment portion 51. Note that the dimension of the attachment part of the thermal displacement sensor 52 may be different from that of the cutting tool, as long as the dimension is 11.8 mm or more and 12.2 mm or less. Furthermore, depending on the model of the NC lathe 1, the cutting-tool tool attachment portion 51 may be formed in a dimension that allows a cutting tool having a thickness different from that of this embodiment to be attached. In this case, by using the thermal displacement sensor 52 having an attachment portion aligned with this dimension, the thermal displacement sensor 52 can be attached to the cutting-tool tool attachment portion 51 in a similar manner likewise in these models.

As the bolt B is tightened, the cutting tool fixture 511 moves upward along an inclined surface 511S. As a result, the attachment part of the first tool T1 or the attachment part of the thermal displacement sensor 52 disposed in the tool attachment portion 51 is sandwiched between the upper surface of the cutting tool fixture 511 and the inner surface of the tool attachment portion 51. By being sandwiched between the inner surface of the tool attachment portion 51 and the cutting tool fixture 511, the first tool T1 and the thermal displacement sensor 52 are held in the tool attachment portion 51.

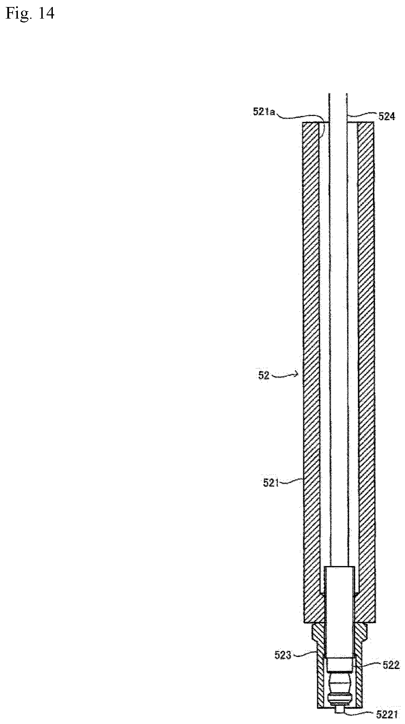

Fig. 14 is a cross-sectional view of the thermal displacement sensor 52 attached to the cutting-tool tool attachment portion 51 provided on the first tool post 5 shown in Fig. 12.

As shown in Fig. 14, the thermal displacement sensor 52 is constituted by a prismatic square shank 521 that serves as the attachment part, a sensor body 522 provided with the contact 5221, a sensor fixing nut 523 for fixing the sensor body 522 to the square shank 521, the sensor cable 524, and the aforementioned sensor connector 525 (see Fig. 12). Note that in Fig. 14, shading indicating the cross-section has not been applied to the sensor body 522 and the sensor cable 524. The square shank 521 has an interior through-hole 521a formed to penetrate in the extension direction thereof, and a female screw is formed at one end (the lower end in Fig. 14) part of the through-hole 521a. The sensor body 522 is roughly cylindrical, and has a male screw formed on an outer diameter part on the other end side opposite to the end side on which the contact 5221 is located. By screwing the male screw of the sensor body 522 into the female screw of the square shank 521 and tightening the sensor fixing nut 523, the square shank 521, the sensor body 522, and the sensor fixing nut 523 are combined and fixed to each other. The sensor cable 524 extends from the other end of the sensor body 522 and is connected to the sensor connector 525.

In this embodiment, by forming the attachment portion of the thermal displacement sensor 52 in the same shape as the attachment portion of the cutting tool serving as the first tool T1, the thermal displacement sensor 52 can be attached to the tool attachment portion 51. Thus, the thermal displacement sensor 52 can be disposed in the desired tool attachment portion 51 among the plurality of tool attachment portions 51, and as a result, the degree of freedom in the location of the thermal displacement sensor 52 is high. Furthermore, since the thermal displacement sensor 52 can be easily removed from the first tool post 5 when repairing or replacing the thermal displacement sensor 52, favorable maintainability is obtained.

The present invention is not limited to the embodiment described above, and various amendments may be applied thereto within the scope set forth in the claims. For example, in this embodiment, an example in which the present invention is applied to the NC lathe 1 was described, but the present invention may be applied to another machine tool such as a machining center or a milling machine. Further, the opening formation portion 112 includes the pair of slits 1122, but may have only one slit 1122 on either side in the width direction. In addition, only one support member 113 may be provided.

Note that constituent elements included only in the description of the modified examples described above may also be applied to other modified examples.

### [Reference Signs List]

- 1: NC lathe (machine tool)
- 8: Chip bucket
- 11: Housing
- 15: Opening cover
- 112: Opening formation portion
- 1121: Opening
- 1122: Slit
- W: Work (workpiece)

## Claims

1. A machine tool for machining a workpiece, comprising:
a housing;
a chip bucket that is placed inside of the housing in order to receive chips produced when the workpiece is machined;
an opening formation portion that is provided in the housing and has an opening formed therein through which the chip bucket can be pulled out to the outside of the housing; and
an opening cover that is detachably attached to the housing so as to close the opening in an attached state attached to the housing,
wherein the opening formation portion has a slit that is formed continuously with the opening so as to extend in a width direction of the opening, and that allows the opening cover removed from the housing to be inserted into the housing.

2. The machine tool according to claim 1, wherein an upper-side part of the opening cover in the attached state is formed to have a width greater than a total width combining the width of the opening and the length of the slit in the extension direction thereof, a lower-side part of the opening cover in the attached state is formed to have a width narrower than the total width, and in the attached state, the upper-side part faces the slit so as to close the slit.

3. The machine tool according to claim 1 or 2, further comprising a support member that is fixed inside of the housing so as to receive and support a lower end part of the opening cover inserted into the housing in the attached state.

4. The machine tool according to claim 3, wherein the support member is disposed below the slit.

5. The machine tool according to claim 1 or 2, wherein the opening cover has a protruding portion that protrudes into a pull-out path of the chip bucket so as to make it impossible to pull the chip bucket out of the housing in a state where the opening cover has been inserted into the housing in a direction in which an inside surface that is on the inside in the attached state forms a lower surface.

6. A chip removal method for a machine tool having a housing, a chip bucket that is placed inside of the housing in order to receive chips produced when a workpiece is machined, an opening formation portion in which an opening through which the chip bucket can be pulled out to the outside of the housing and a slit formed continuously with the opening so as to extend in a width direction of the opening are formed, and an opening cover that is detachably attached to the housing so as to close the opening in an attached state attached to the housing, the chip removal method comprising:
a removal step for removing the opening cover from the housing;
an insertion step for inserting the opening cover removed in the removal step into the housing by inserting the opening cover into the slit; and
a pull-out step for pulling the chip bucket out of the housing.
